# EUROPÄISCHE PATENTANMELDUNG

(11) **EP 2 420 531 A1**
(43) Veröffentlichungstag der Anmeldung: **22.02.2012**
(21) Anmeldenummer: 11177626.6
(22) Anmeldetag: 16.08.2011
(51) Int. Cl.: C08J 9/00, C08K 3/00, C08K 13/02

(54) **Extrusionsschaumstoffe mit verbesserter Steifigkeit**

(30) Priorität: 18.08.2010 EP 10173226
(71) Anmelder: BASF SE, 67056 Ludwigshafen (DE)
(72) Erfinder: Scherzer, Dietrich, 67433 Neustadt (DE); Hahn, Klaus, 67281 Kirchheim (DE); Hofmann, Maximilian, 68167 Mannheim (DE); Sandler, Jan Kurt Walter, 69126 Heidelberg (DE); Ruckdäschel, Holger, 67487 St. Martin (DE)
(74) Vertreter: Ellwanger, Arndt

(57) **Zusammenfassung**

Die vorliegende Erfindung betrifft einen Extrusionsschaumstoff auf Basis von mindestens einem Polymer ausgewählt aus Polystyrol, einem aus Styrol hergestellten Copolymeren, Polysulfon oder Polyethersulfon, wobei im Extrusionsschaumstoff mindestens ein mineralischer Füllstoff mit einer Partikelgröße ≤ 10 µm und mindestens ein Keimbildner auf Basis eines Wachses oder eines epoxygruppenhaltigen Oligomeren enthalten ist

## Beschreibung

Die vorliegende Erfindung betrifft einen Extrusionsschaumstoff auf Basis eines Polymers wie Polystyrol, in dem mindestens ein mineralischer Füllstoff mit einer Partikelgröße ≤ 10 µm und mindestens ein Keimbildner enthalten sind. Weiterhin betrifft die vorliegende Erfindung ein Verfahren zur Herstellung eines solchen Extrusionsschaumstoffs. Die erfindungsgemäßen Extrusionsschaumstoffe zeichnen sich durch ihre verbesserte Steifigkeit aus.

Extrusionsschaumstoffe, die auch als extrudierte Schaumstoffe oder Extrusionsschäume bezeichnet werden, sind seit langem bekannt. Beispielsweise können extrudierte Polystyrol-Schaumstoffe (XPS) zum Isolieren von Gebäuden oder Gebäudeteilen eingesetzt werden. Für diesen Anwendungszweck müssen die Schaumstoffplatten eine möglichst niedrige Wärmeleitfähigkeit aufweisen. So beschreibt EP-A 1 661 939 Extrusions-Schaumstoffplatten auf Basis von Styrolpolymerisaten mit einer Dichte im Bereich von 20 bis 200 kg/m³ und verminderter Wärmeleitfähigkeit. Diese Extrusions-Schaumstoffplatten haben eine mittlere Zellgröße im Bereich von 0,08 bis 0,25 mm und eine mittlere Zellwanddicke im Bereich von 350 bis 1500 nm. Die Extrusionsschäume können auch Ruß, Graphit oder Nukleierungsmittel wie Talkum bei einer mittleren Teilchengröße von 10 µm aufweisen.

Die der Erfindung zugrundeliegende Aufgabe besteht in der Bereitstellung von neuen Extrusionsschaumstoffen. Vorzugsweise sollen die neuen Extrusionsschaumstoffe eine verbesserte Steifigkeit aufweisen.

Gelöst wird die Aufgabe durch einen Extrusionsschaumstoff auf Basis von mindestens einem Polymer ausgewählt aus Polystyrol, einem aus Styrol hergestellten Copolymeren, Polysulfon oder Polyethersulfon, wobei im Extrusionsschaumstoff mindestens ein mineralischer Füllstoff mit einer Partikelgröße ≤ 10 µm und mindestens ein Keimbildner auf Basis eines Wachses oder eines Oligomeren enthalten ist.

Die erfindungsgemäßen Extrusionsschaumstoffe zeichnen sich dadurch aus, dass die Zellwände aufgrund der gleichzeitigen Zugabe von sowohl mindestens einem mineralischen Füllstoff mit einer Partikelgröße ≤ 10 µm und mindestens einem Keimbildner auf Basis eines Wachses oder eines Oligomeren verstärkt werden, so dass besonders steife Schaumstoffe erzeugt werden können. Aufgrund der Zugabe des Keimbildners zum mineralischen Füllstoff kann die nukleierende Wirkung der Nano- bzw. Mikroteilchen (mineralischer Füllstoff) verringert werden, so dass größere Mengen dieser Teilchen zugegeben werden können. Folglich weisen die erfindungsgemäßen Extrusionsschaumstoffe eine erhöhte Steifheit bzw. Druckfestigkeit auf.

Ein weiterer Vorteil der vorliegenden Erfindung ist es, dass insbesondere die Festigkeit der Extrusionsschaumstoffe in Steigrichtung (Y-Richtung beim Extrusionsprozess) erhöht werden kann. Auf diese Weise lassen sich auch verbesserte Werte für die Druckspannung in Relation zur Dichte des Extrusionsschaumstoffes erzielen.

Nachfolgend werden der erfindungsgemäße Extrusionsschaumstoff sowie das erfindungsgemäße Herstellungsverfahren dieses Extrusionsschaumstoffes näher definiert.

Der Extrusionsschaumstoff ist auf Basis von mindestens einem Polymer ausgewählt aus Polystyrol, einem aus Styrol hergestellten Copolymer, Polysulfon oder Polyethersulfon. In anderen Worten ausgedrückt bedeutet dies, dass der erfindungsgemäße Extrusionsschaumstoff durch ein weiter unter beschriebenes Extrusionsverfahren aus diesem Polymer hergestellt wird. Gegebenenfalls können zur Herstellung des erfindungsgemäßen Extrusionsschaumstoffes auch zwei oder mehrere dieser Polymere verwendet werden, vorzugsweise wird eines dieser Polymere verwendet. Verfahren zur Herstellung der im Extrusionsverfahren eingesetzten Polymere sind dem Fachmann ebenfalls bekannt.

Sofern der erfindungsgemäße Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol.

Vorzugsweise wird im erfindungsgemäß Extrusionsschaumstoff als Polymer Polystyrol oder ein Styrol-Acrylnitril-Polymer (SAN) verwendet.

Die erfindungsgemäßen Extrusionsschaumstoffe weisen bevorzugt Zellen auf, die gemessen nach DIN 4590 zumindest zu 90 %, insbesondere zu 95 bis 100 % geschlossenzellig sind.

Die erfindungsgemäßen Extrusionsschaumstoffe sind vorzugsweise plattenförmig. Gegebenenfalls können sie auch folienförmig oder eine sonstige, dem Fachmann bekannte Geometrie aufweisen.

Der erfindungsgemäße Extrusionsschaumstoff enthält mindestens einen mineralischen Füllstoff mit einer Partikelgröße ≤ 10 µm. Prinzipiell kann jeder dem Fachmann bekannte mineralische Füllstoff verwendet werden, sofern dieser eine Partikelgröße ≤ 10 µm aufweist. Geeignete mineralische Füllstoffe sind beispielsweise pulverförmige anorganische Stoffe. Gegebenenfalls können diese Füllstoffe aber auch kugel- oder faserförmig sein. Diese Füllstoffe werden oft auch als Nukleierungsmittel bezeichnet, weil sie Auswirkung auf Zellzahlen und Zellwanddicken der Extrusionsschaumstoffe haben können.

Geeignete mineralische Füllstoffe sind Talk, Talkum, Kreide, Kaolin, Metalloxide, Metallhydroxide wie Aluminiumhydroxid oder Magnesiumhydroxid, Aluminiumnitrid, Silikate, Aluminiumsilikate, Bariumsulfat, Calciumcarbonat, Calciumsulfat, Kieselsäure, Quarzmehl, Aerosil, Tonerde oder Wollastonit. Bevorzugte Silikate sind Schichtsilikate wie beispielsweise Montmorillonite. Gegebenenfalls können die mineralischen Füllstoffe auch in gecoateter Form vorliegen. Ein bevorzugtes Beispiel für einen gecoateten Füllstoff ist natürlicher Montmorillonit, der mit quartären Ammoniumverbindungen modifiziert ist.

Beispiele für kommerziell erhältliche mineralische Füllstoffe sind Montmorillonite wie Cloisite^{®} 30B der Fa. Southern Clay Products oder das Talkum Microtalk IT Extra der Fa. Mondo Minerals (Amsterdam).

Bevorzugt als mineralische Füllstoffe ist ein Talkum, ein Metalloxid oder ein Silikat. Vorzugsweise beträgt die Partikelgröße des mineralischen Füllstoffs in den erfindungsgemäßen Extrusionsschaumstoffen 10 nm bis 8 µm, insbesondere 50 nm bis 6 µm. Im Rahmen der vorliegenden Erfindung sind die Partikelgrößen als durchschnittliche Partikelgrößen angegeben (D₅₀-Wert).

Weiterhin enthalten die erfindungsgemäßen Extrusionsschaumstoffe mindestens einen Keimbildner auf Basis eines Wachses oder eines Oligomeren. Solche Keimbildner, die auch als reaktive Compatibilizer bezeichnet werden, sind dem Fachmann bekannt. Geeignete Keimbildner sind beispielsweise die kommerziell erhältlichen Produkte der Reihe Luwax (Polyethylenwachse) oder Joncryl (epoxygruppenhaltige Oligomere) der BASF SE, Ludwigshafen. Bei den Wachsen kann es sich um reine oder modifizierte Polyethylenwachse, beispielsweise Oxidate oder Copolymerisate sowie gegebenenfalls Montanwachse und Polyetherwachse handeln. Die Polyethylenwachse werden in der Regel in einem Hochdruckverfahren hergestellt. Sie sind als Mikronisat, als Pulver, als Granulat, als Schuppen oder Pastillen erhältlich. Bei den Oligomeren kann es sich um Styrolacrylatharzlösungen, Styrolglycidylacrylate, filmbildende RC-Dispersionen oder Kolloidalacrylate handeln. Bevorzugter Keimbildner ist ein Polyethylenwachs oder ein epoxygruppenhaltiges Oligomer.

Darüber hinaus können in den erfindungsgemäßen Extrusionsschaumstoffen weitere, dem Fachmann bekannte Verbindungen enthalten sein. Beispiele für solche optionalen Komponenten sind IR-Absorber wie Ruß, Metallpulver, zum Beispiel Aluminiumpulver, Titandioxid oder Graphit, Flammschutzmittel wie organische Bromverbindungen oder sonstige Zusatz- und/oder Hilfsstoffe in Form von Antistatika, Stabilisatoren oder Farbstoffe. Gegebenenfalls können in den erfindungsgemäßen Extrusionsschaumstoffen auch Spuren des bei der Extrusion eingesetzten Treibmittels enthalten sein.

Der mineralische Füllstoff, der Keimbildner sowie gegebenenfalls weitere Stoffe können in den erfindungsgemäßen Extrusionsschaumstoffen in dem Fachmann bekannten Mengen enthalten sein. Der mineralische Füllstoff mit einer Partikelgröße ≤ 10 µm ist vorzugsweise zu 0,5 bis 5 Gew.-%. insbesondere zu 0,5 bis 1 Gew.-% im Extrusionsschaumstoff enthalten. Der Keimbildner ist vorzugsweise zu 0,2 bis 2 Gew.-%, insbesondere zu 0,5 bis 1 Gew.% im Extrusionsschaumstoff enthalten. Sofern vorhanden, beläuft sich die Summe der sonstigen Zusatzstoffe, die im Extrusionsschaumstoff enthalten sein können, auf maximal 10 Gew.-%.

Ein weiterer Gegenstand der vorliegenden Erfindung ist ein Verfahren zur Herstellung des erfindungsgemäßen Extrusionsschaumstoffes. Solche Verfahren sind dem Fachmann prinzipiell bekannt. Vorzugsweise werden die erfindungsgemäßen Extrusionsschaumstoffe hergestellt durch Extrusion einer Schmelze umfassend - wie vorstehend definiert - das Polymer, mindestens einen mineralischen Füllstoff mit einer Partikelgröße 5 10 µm und mindestens einen Keimbildner auf Basis eines Wachses oder eines Oligomeren. Gegebenenfalls können weitere Zusatzstoffe vorhanden sein. Die Extrusion erfolgt in Gegenwart eines Treibmittels. Geeignete Treibmittel sind dem Fachmann bekannt, normalerweise handelt es sich um flüchtige organische Verbindungen wie Fluorchlorkohlenwasserstoffe, Fluorkohlenwasserstoffe, Kohlenwasserstoffe, Alkohole, Ketone oder Ether. Vorzugsweise werden jedoch halogenfreie Treibmittel oder Treibmittelgemische, beispielsweise anorganische Gase wie Kohlendioxid, Stickstoff, Argon und Ammoniak, gegebenenfalls in Gemischen mit Alkoholen, Kohlenwasserstoffen, Ketonen oder Ethern verwendet. Das Treibmittel wird normalerweise in Mengen von 3 bis 15 Gew.-%, vorzugsweise 4 bis 12 Gew.-% bezogen auf das Polymer des Extrusionsschaumstoffs eingesetzt.

Nachfolgend wird die Erfindung anhand von Beispielen verdeutlicht.

### Beispiel 1

In einer Versuchsanlage zur Herstellung von extrudierten Schäumen wird Polystyrol PS 158K mit den Masterbatches der genannten Additive (mineralischer Füllstoff sowie Keimbildner: Konzentration je 10 Gew.-% in PS 158K) unter Zusatz von 3,3 % CO₂ und 2,35 % Ethanol als Treibmittel verarbeitet. Masterbatches bedeutet, dass zunächst in jeweils einem separaten Extruder Konzentrate der jeweiligen Additive in Polystyrol hergestellt werden. Diese Konzentrate werden dann in den Prozess zugegeben, um das Einmischen zu erleichtern.

Die eingesetzten Polymere werden zusammen mit den Additiven kontinuierlich einem Aufschmelzextruder zugeführt. Der Gesamtdurchsatz der Polymere beträgt 12 kg/h. Durch eine in dem Aufschmelzextruder eingebrachte Injektionsöffnung werden kontinuierlich die Treibmittel (CO₂, Ethanol) zugeführt. Die treibmittelhaltige Schmelze wird in einem nachfolgenden Kühlextruder abgekühlt und durch eine Schlitzdüse extrudiert. Die aufschäumende Schmelze wird ohne Kalibrierung über ein Rollenband abgezogen. Die extrudierten Querschnitte weisen bei einer typischen Dichte von 45 bis 65 g/l eine Höhe von ca. 10 bis 20 mm und eine Breite von ca. 80 mm auf. Die Eigenschaften der fertigen Schaumstoffplatten werden anhand der folgenden Normen bestimmt: (1) Druck-E-Modul nach ISO 381, (2) Druckfestigkeit bei unterschiedlichen Stauchungen bei DIN 3386-1, (3) Geschlossenzelligkeit nach DIN ISO 4590.

### Eingesetzte Komponenten

Polystyrol 158 K (PS 158K): Standardpolystyrol der BASF SE, Ludwigshafen (Deutschland) Luwax: Luwax AH3 Pulver, ein Polyethylenwachs der BASF SE, Ludwigshafen Cloisite: Cloisite 30 B, ein mit quartären Ammoniumverbindungen modifiziertes Montmorillonit der Fa. Southern Clay Products, Gonzales USA (d50% = 6 µm). Talkum: Microtalc IT Extra der Firma Mondo Minerals, Amsterdam (d50% = 1.7 µm). Joncryl ADR 4368: ein reaktives oligomeres epoxygruppenhaltiges Additiv der BASF SE, Ludwigshafen Tabelle 1

| Versuch Nr. | Polymer | mineralischer Füllstoff | Keim bildner | Dichte | E-Modul senkrecht zur Abzugsrichtung | E-Modul in Abzugsrichtung | Schaumstruktur (optische Beurteilung |
|---|---|---|---|---|---|---|---|
| | | Gew.-% | Gew.-% | g/l | N/mm² | N/mm² | |
| 1 (Vgl) | PS 158K | | | 52.4 | 6.3 | 16.1 | 3 |
| 2 (Vgl.) | PS 158K | 1.0 Cloisite | | 52.3 | 6.5 | 14.9 | 4 |
| 3 | PS 158K | 1.0 Cloisite | 0,6 Luwax | 52.3 | 9.8 | 19.9 | 2 |
| 4 | PS 158K | 1.0 Cloisite | 0.3 Joncryl | 50.8 | 10.1 | 17.8 | 2 |
| 5 (Vgl) | PS 158K | 2.0 Cloisite | | 61.4 | 12.1 | 13.5 | 5 |
| 6 (Vgl) | PS 158K | 4.0 Cloisite | | 60.2 | 18.8 | 16.9 | 6 |
| 7 (Vgl) | PS 158K | 1.0 Talkum | | 52.2 | 9.4 | 15.8 | 4 |
| 8 | PS 158K | 1.0 Talkum | 0.6 Luwax | 52.5 | 12.4 | 15.3 | 2 |

| | | | | | | | |
|---|---|---|---|---|---|---|---|
| (Vgl) = Vergleichsbeispiel | | | | | | | |

Die vorstehenden Versuche gemäß Tabelle 1 zeigen, dass die erfindungsgemäßen Extrusionsschaumstoffe (bei vergleichbaren Dichten) über verbesserte Eigenschaften verfügen. So ist eine verbesserte Druckfestigkeit (Steifheit) senkrecht zur Abzugsrichtung (Y-Richtung beim Extrusionsprozess; höhere Werte) festzustellen. Weiterhin zeigen die erfindungsgemäßen Extrusionsschaumstoffe eine verbesserte Schaumstruktur (niedrigere Werte) und damit niedriger Wärmeleitfähigkeit. Die Bewertung der Schaumstruktur entspricht Schulnoten. 1 und 2 gut, 3 und 4 befriedigend, 5 und 6 schlecht.

## Patentansprüche

1. Extrusionsschaumstoff auf Basis von mindestens einem Polymer ausgewählt aus Polystyrol, einem aus Styrol hergestellten Copolymer, Polysulfon oder Polyethersulfon, wobei im Extrusionsschaumstoff mindestens ein mineralischer Füllstoff mit einer Partikelgröße 5 10 µm und mindestens ein Keimbildner auf Basis eines Wachses oder eines Oligomeren enthalten sind.

2. Extrusionsschaumstoff gemäß Anspruch 1, **dadurch gekennzeichnet, dass** der mineralische Füllstoff mit einer Partikelgröße ≤ 10 µm zu 0,5 bis 5 Gew.-% im Extrusionsschaumstoff enthalten ist.

3. Extrusionsschaumstoff gemäß Anspruch 1 oder 2, **dadurch gekennzeichnet, dass** der Keimbildner zu 0,2 bis 2 Gew.-% im Extrusionsschaumstoff enthalten ist.

4. Extrusionsschaumstoff gemäß einem der Ansprüche 1 bis 3, **dadurch gekennzeichnet, dass** ein aus Styrol hergestelltes Copolymer als Comonomer zu Styrol ein Monomer aufweist, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat.

5. Extrusionsschaumstoff gemäß einem der Ansprüche 1 bis 4, **dadurch gekennzeichnet, dass** das Polymer Polystyrol oder ein Styrol-Acrylnitril-Polymer (SAN) ist.

6. Extrusionsschaumstoff gemäß einem der Ansprüche 1 bis 5, **dadurch gekennzeichnet, dass** der mineralische Füllstoff mit einer Partikelgröße ≤ 10 µm ein Talkum, ein Metalloxid oder ein Silikat ist.

7. Extrusionsschaumstoff gemäß einem der Ansprüche 1 bis 6, **dadurch gekennzeichnet, dass** der Keimbildner ein Polyethylenwachs oder ein epoxygruppenhaltiges Oligomer ist.

8. Extrusionsschaumstoff gemäß einem der Ansprüche 1 bis 7, **dadurch gekennzeichnet, dass** die Partikelgröße des mineralischen Füllstoffs 10 nm bis 8 µm, insbesondere 50 nm bis 6 µm beträgt.

9. Verfahren zur Herstellung eines Extrusionsschaumstoffes gemäß einem der Ansprüche 1 bis 8 durch Extrusion einer Schmelze umfassend das Polymer, mindestens einen mineralischen Füllstoff mit einer Partikelgröße ≤ 10 µm und mindestens einen Keimbildner auf Basis eines Wachses oder eines Oligomeren in Gegenwart von Treibmittel.
